Europäisches Patentamt

European Patent Office

Office européen des brevets

(11) Publication number: **0 278 772**
**A1**

## EUROPEAN PATENT APPLICATION

(21) Application number: 88301184.3

(22) Date of filing: 12.02.88

(51) Int. Cl.⁴: **B 01 D 46/24**

(30) Priority: 13.02.87 GB 8703314

(43) Date of publication of application:
17.08.88 Bulletin 88/33

(84) Designated Contracting States:
AT BE CH DE ES FR GR IT LI NL SE

(71) Applicant: PROCESS SCIENTIFIC INNOVATIONS
LIMITED
Industrial Estate
Bowburn Durham, DH6 5AD (GB)

(72) Inventor: Hunter, George Sherwood
The Old Rectory Melsonby
North Yorkshire DL10 5NF (GB)

(74) Representative: Cole, Paul Gilbert et al
Hughes Clark Byrne & Parker 63 Lincoln's Inn Fields P.O.
Box 22
London WC2A 3JU (GB)

(54) Air/oil separator.

(57) An air/oil separator for removing entrained oil droplets from the output side of a compressor or vacuum pump comprises a filter head (10) providing an inlet port (45) and an outlet port (16) leading to a filter element (32) in a housing (20) sealed to the filter head (10). Through the element (32) air flows in an out-to-in direction. A swirl plate (34) provides an air flow in an outer chamber (47) of the housing (20) that has a centrifugal component so that in use a major part of the entrained oil is deposited on the inner surface of the housing (20). A first oil recovery line (24) provides for return of the oil deposited in the housing (20) and a second oil recovery line provides for return of oil coalesced in the element (32). At least the oil coalesced in the element (32) is returned via a tube (49) attached to the filter head (10) and worked by differential pressure.

Fig.1.

**Description**

## AIR/OIL SEPARATOR

This invention relates to a separator for removing oil droplets from air or vacuum systems and in particular to separators intended to be used on the downstream side of a compressor or vacuum pump.

There is described in British Patent Specification No.1566220 an air-liquid separator for a compressor that can be changed as a complete unit but the flow is limited to an in-to-out direction because of the method of oil drainage adopted and no provision is made for positive recovery of the coalesced oil and return thereof to the sump of the compressor.

According to the present invention there is provided an air/oil separator for removing entrained oil droplets from the output side of a compressor or vacuum pump comprising a connecting means providing an inlet port and an outlet port leading to a filter element in a housing sealed to the connecting means, through which element air flows in an out-to-in direction, means providing an air flow in an outer chamber of the housing that has a centrifugal component so that in use a first part of the entrained oil is deposited on the inner surface of the housing, first oil recovery means providing for return of the oil deposited in the housing and second oil recovery means providing for return of oil coalesced in the element with at least the oil coalesced in the element being returned via a tube attached to the connecting means and worked by differential pressure.

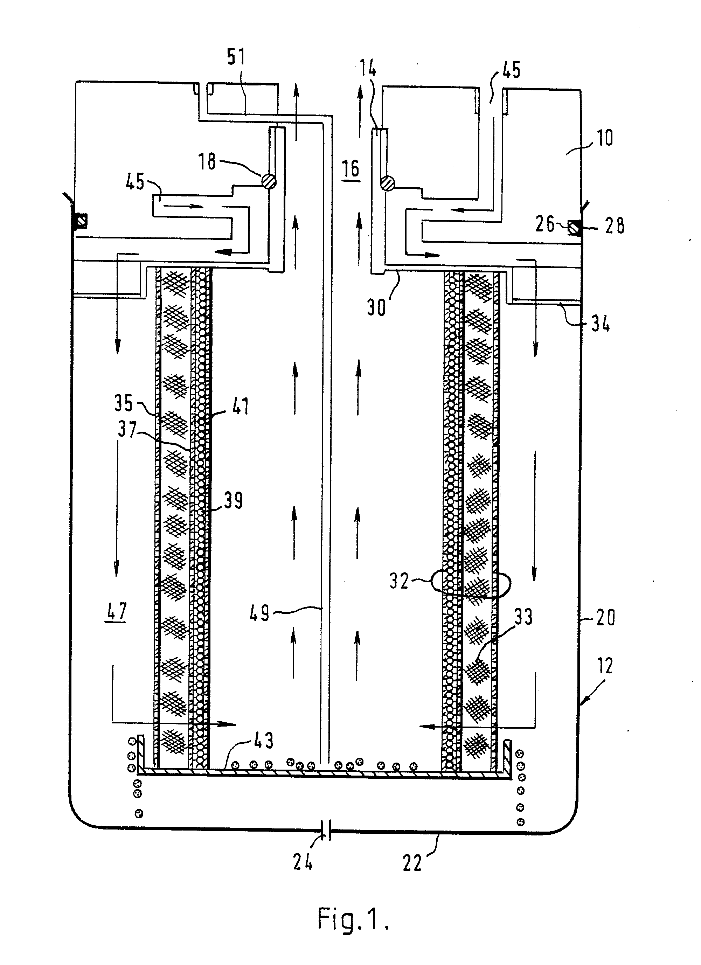

Embodiments of the invention will now be described by way of example only with reference to Figures 1 to 6 of the accompanying drawings which are longitudinal sections of respective forms of the invention.

In Figure 1 an oil/air separator assembly comprises a manifold block 10 and a canister 12 that is spun on to the block 10 by a spigot 14 that threadedly engages a central discharge port 16 in the block 10, to which it is sealed by an O-ring 18. The canister 12 has a generally bell-shaped outer skin 20 whose end wall 22 is formed with means for drainage which is conveniently shown as a central aperture 24 into which is connected a drain return pipe (not shown) for returning oil to the sump, the return pipe fitting, for example, to a stub pipe depending from the wall 22 by means of a compression fitting connector. The drain may alternatively be located at an edge corner of the canister. The mouth of the outer skin 20 is closed off by means of a peripheral O-ring 26 that fits in a groove 28 between the mouth and the periphery of the manifold block 10. The spigot 14 is connected to an annular basal end plate 30 that closes off one end of a cylindrical coalescing element 32 and is stepped to provide a support for a finned annular swirl plate 34 that fits between the basal end of the element 32 and the outer skin 20 to which it is joined, for example, by welding or is hermetically sealed. The element 32 has a microfibre moulded filter tube 33 (as described in our UK Patent No.1603519) with outer and inner expanded support cylinders 35, 37, and has an internal coalescing layer 39 of non-woven polyester felt supported by a foraminous screen, typically an expanded metal screen 41. The outer support cylinder or protective sleeve 35 may conveniently be of porous felt which acts as a pre-filter for fine particles in the air-stream which has been compressed. The nominal pore size of such a layer is typically about 50 micrometers. When processed with the moulded filter tube 33 by impregnation with a resin, typically an epoxy resin, there are imparted to the felt of sleeve 35 additional oleophobic and hydrophobic qualities, keeping the build up of oil on the coalescing layer 39 to a minimum and improving the pressure drop characteristics of the filter. The terminal end of the element 32 is closed off by means of an end cap 43.

As is apparent, the air/oil mixture flows from outside to inside the element 32. It passes from inlet port 45 of manifold 10 to an outer chamber 47 of the canister 12 where not unusually up to 95% of the free oil is taken out by the action of plate 34 which causes the gas flow to have a centrifugal component. Most of the oil drains down the inner face of the skin 20 and returns via the drain 24 to the sump of the compressor with which the assembly is intended to be used. Air flows radially through the filter tube 33 and coalescing layer 39 and returns as a cleaned flow through the outlet port 16. Coalesced oil within the element 32 collects on the end cap 43 from which it is sucked by means of an axially located syphon pipe 49 which extends through the port 16 and is mounted to the manifold 10 as at 51 above the spigot 14. Oil returns from the syphon tube 49 because of the high pressure prevailing within the canister 12 compared with the lower pressure in the sump of the machine.

The advantages of this canister arrangement are that the canister is disposed and easily serviced, that it can be remote from the compressor and is economical to manufacture.

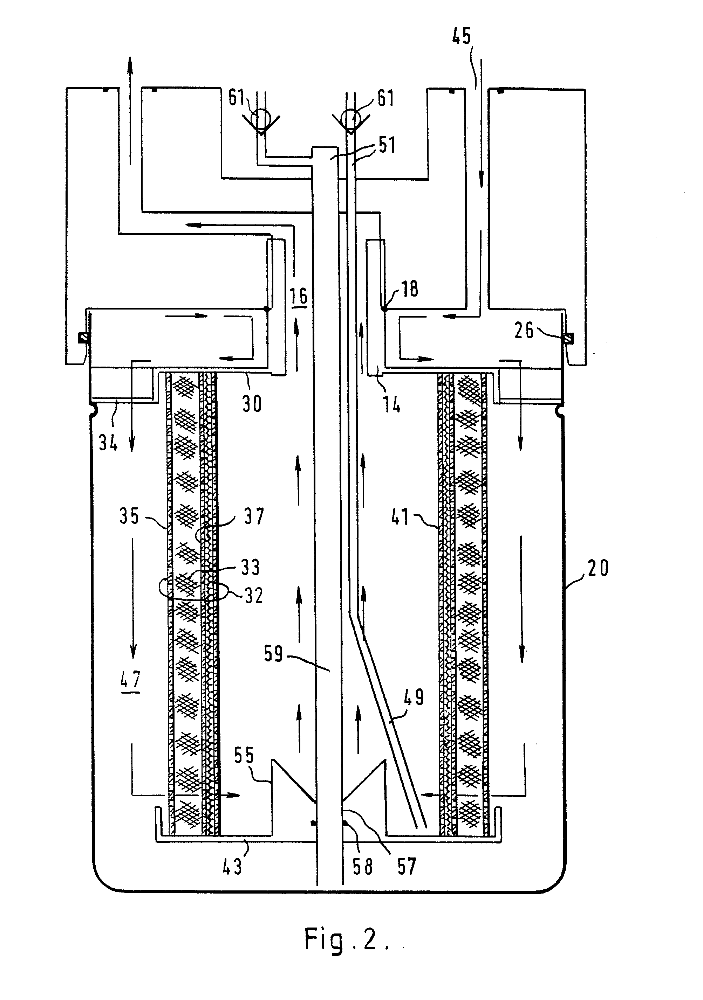

The assembly of Figure 2 is generally similar to Figure 1 except that the drain 24 has been deleted; the pipe 49 is retained and the additional pipe 59 extends through the end cap 43 to collect oil in the bottom of the outer skin 20 of the canister. End cap 43 is formed with an integral bushing 55 having an axial through bore 57 through which the pipe 59 passes and is sealed by an internal O-ring. Non-return valves (optional) 61 in the pipes 49, 59 prevent unwanted oil return from each pipe.

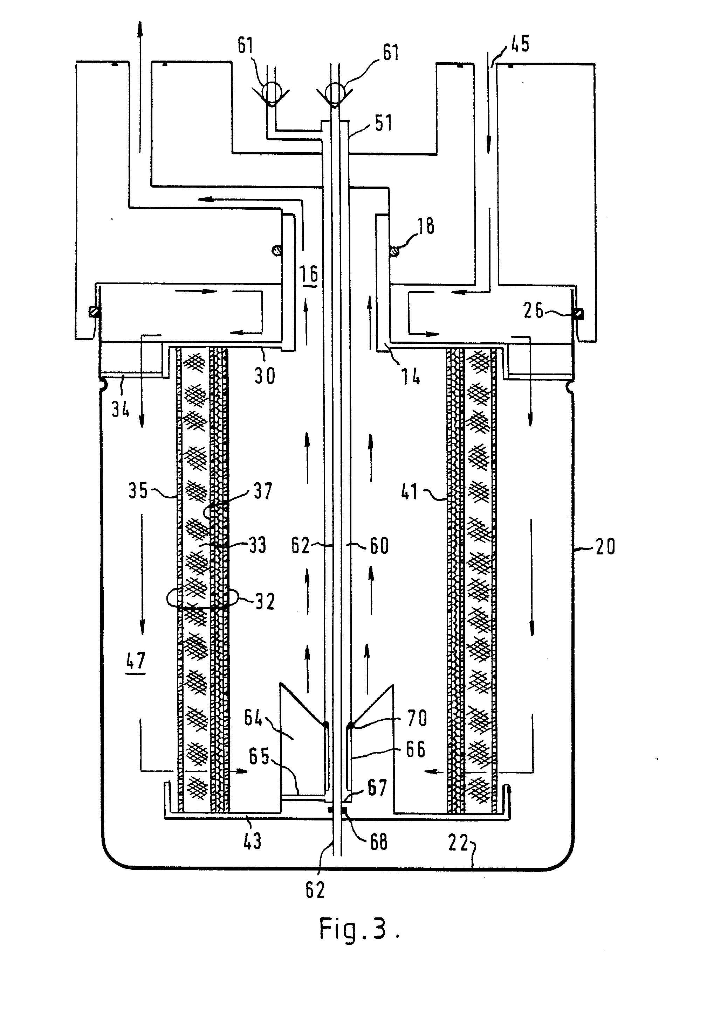

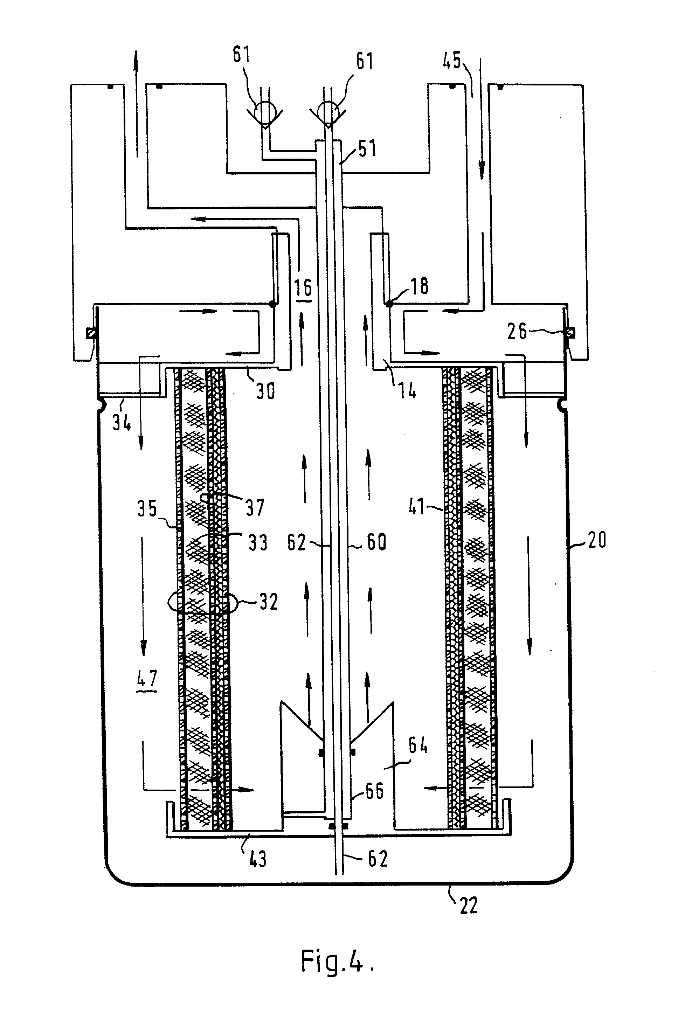

Where a pair of tubes is used they may be placed one inside the other with an inner relatively long tube depending to the end wall 22 to collect oil from the canister and a relatively short outer tube to collect oil from the coalescing element end cap 43, desirably via a radial collecting tube formed in an upstanding integral spigot of the end cap 43 into which the outer tube is a sealing fit. This is shown in Figure 3 which relates to a further form of the assembly in which the end cap 43 is formed with an integral bushing 64 having an axial through bore 66 that is stepped at 67 to define a reduced diameter lower region 68. One or more radial oil flow passages 65 communicate the bore 66 just above the step 67 with the interior of the element 82 just above the top face of the end cap 43. Concentric inner and outer oil syphon tubes 60,62 depend from the manifold block 10 into the interior space of the element 32. The outer tube 60 is a screw fit in the bore 66 to which it is sealed by an O-ring 70. The coalescing element 32 is fastened to the block 10 through the outer tube 60, the spigot 14 being plain and being a sliding fit in the discharge port 16. The narrow inner tube 62 is a sliding fit in the narrow lower region 68 of the bore 66 and depends from the end cap 43 to collect oil collecting on the inner face of canister end wall 22. In use oil is collected through the depending tip of the inner tube 62 and through flow passage 65. Figure 4 shows a similar structure except that the method of fixing has been modified: the outer tube 60 and bore 66 are now plain and the threaded connection is now established through spigot 14 and discharge port 16 with re-siting of the O-ring 18.

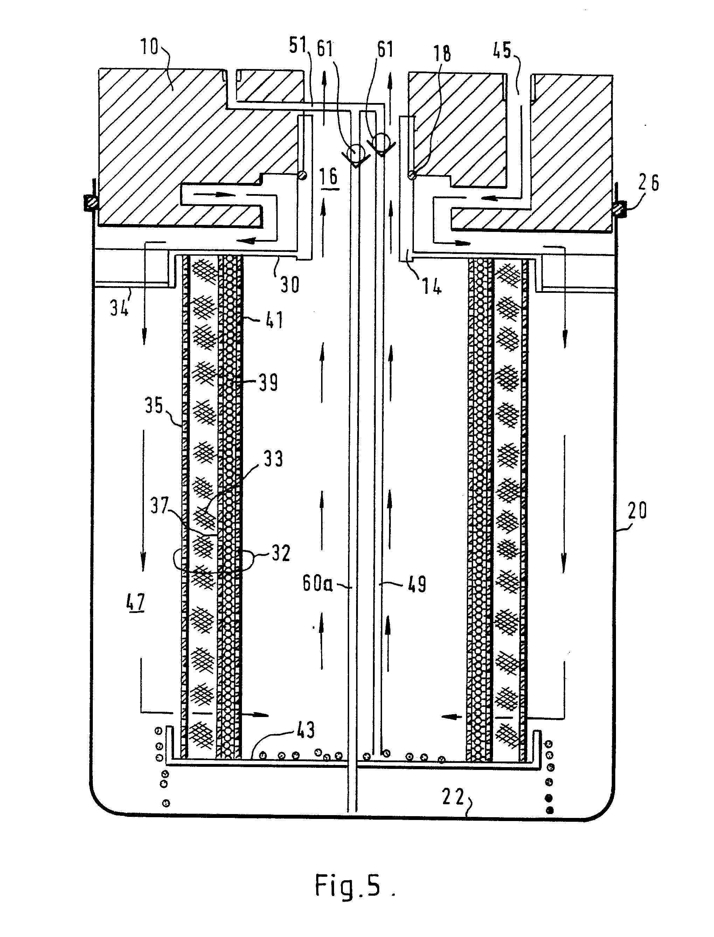

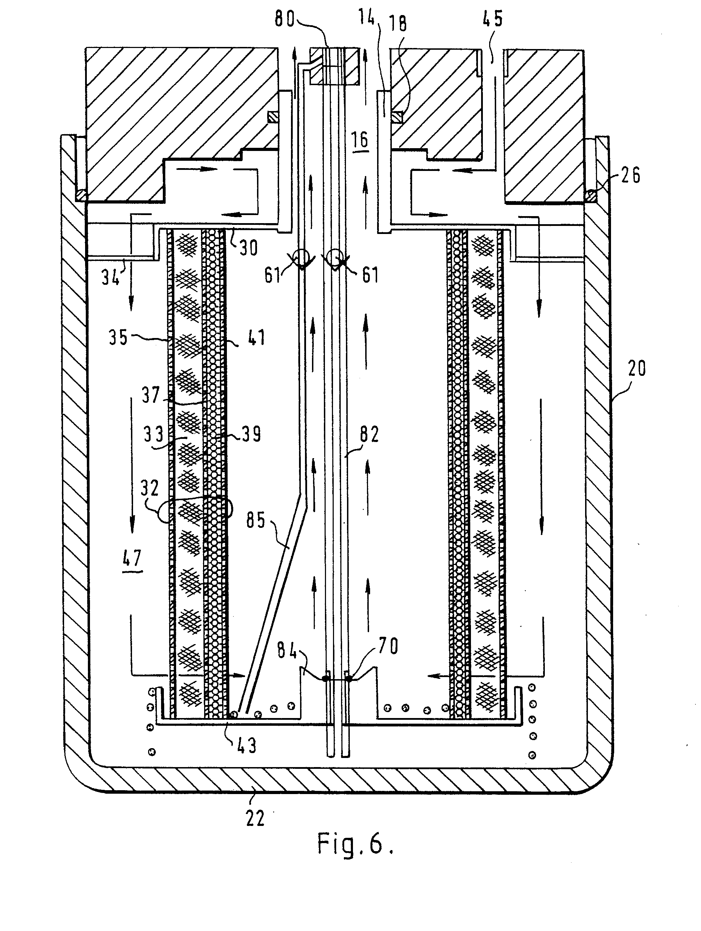

Figure 5 is similar to Figure 1 except that there are a pair of syphon tubes 49,60a, one of which 60a passes through end cap 43 to collect oil from the inner face of end wall 22. A further form of the assembly is shown in Figure 6 where an annular syphon point 80 is attached to a hollow rod 82 that extends through end cap 43 onto which it is threaded and sealed via integral bushing 84 and that terminates just above the end wall 22 of the outer skin 20 for collection of the major part of the oil which is deposited in chamber 47. A separate tube 85 leads from the inner surface of end cap 43 to syphon point 80 for collecting oil that has coalesced and gravitated into the cap 43. Pipe 85 and rod 82 are fitted with optional non-return valves 61 for preventing unwanted oil returning to the filter and/or canister. Spigot 14 is now a simple push fit into the discharge port 16, in Figure 6 the outer casing 20, 22 would be reusable when the separator element 32 is changed.

Although the invention has been described for use in association with a compressor it is equally applicable for use with a vacuum pump where the same requirement for oil/air separation exists.

## Claims

1. An air/oil separator for removing entrained oil droplets from the output side of a compressor or vacuum pump comprises a connecting means (10) providing an inlet port (45) and an outlet port (16) leading to a filter element (32) in a housing (20) sealed to the connecting means (10), through which element (32) air flows in an out-to-in direction, means (34) providing an air flow in an outer chamber (47) of the housing (20) that has a centrifugal component so that in use a first part of the entrained oil is deposited on the inner surface of the housing (20), first oil recovery means (24) providing for return of the oil deposited in the housing (20) and second oil recovery means providing for return of oil coalesced in the element (32) with at least the oil coalesced in the element (32) being returned via a tube (49) attached to the connecting means (10) and worked by differential pressure.

2. A separator according to claim 1, wherein a second tube (24) worked by differential pressure returns oil deposited on the inner surface of the housing(20).

3. A separator according to claim 2, wherein the second tube (24) is a drainage outlet from the housing (20) to which oil gravitates from the inner surface of the housing (20) said outlet (24) being located in a region (22) of the housing (20) opposite to the connecting means (10).

4. A separator according to claim 2, wherein the second tube (59) is attached to the connecting means (10) and worked by differential pressure, said second tube depending through a terminal portion (43) of the filter element to a region (22) of the housing (20) opposite to the connecting means (10), to which region (22) oil gravitates from the inner surface of the housing (20).

5. A separator according to claim 4, wherein the first and second tubes (49,59) are each provided with non-return valves (61).

6. A separator according to claim 2, wherein the first and second tubes (60,62) are one within the other and the filter element (32) is closed at its end remote from the connecting means (10) by an end cap (43) having a spigot (64) in which the outer tube (60) sealingly fits, the spigot (64) having an oil collection tube (65) for leading oil from the end cap (43) to an outer one of the tubes (60).

7. A separator according to claim 6, wherein a basal region of the filter element (32) has a threaded spigot (14) that engages into a threaded gas discharge port (16) of the connecting means (10) to retain the housing (20) on the connecting means (10).

8. A separator according to claim 2, wherein a basal region of the filter element (32) has a spigot (14) that is a gas-tight push fit into a gas discharge port (16) of the connecting means (10), a terminal region (64) of the filter element (32) engaging an exteriorly threaded tip region of a hollow rod (60) depending from the connecting means (10), said hollow rod acting as said first or second tube.

9. A separator according to claim 1, wherein the filter element (32) comprises a moulded microfibre filter tube (33) which (a) is confined between inner and outer foraminous support cylinders (35, 37) and/or (b) has an outer felt layer with a nominal rating of 50 microns moulded in situ with a micro fibre tube (33) and a support cylinder (37) impregnated with a synthetic resin.

10. A separator according to claim 9, wherein the filter element (32) further includes a cylindrical screen (41) of expanded metal that fits coaxially within the inner support cylinder (37) and a coalescing layer (39) between the inner support cylinder (37) and the screen (41).

0278772

Fig.1.

0278772

Fig.2.

0278772

Fig.3.

0278772

Fig.4.

Fig.5 .

0278772

Fig.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 121 999 (CASH ENGINEERING CO. PTY. LTD) * Page 7, line 10 - page 8, line 20; figure 2 * | 1,2,5 | B 01 D 46/24 |
| Y,D | GB-A-1 566 220 (AUTOMOTIVE PRODUCTS LTD) * Whole document * | 1,2,5 | |
| A | DE-A-3 445 400 (BLITZ M. SCHNEIDER WERKZEUG- UND MASCHINENFABRIK GmbH) * Claim 1; page 7, last paragraph; figure 1 * | 1 | |
| A | FR-A-2 263 804 (PALL CORP.) * Page 10, line 22 - page 11, line 21; page 12, lines 8-12; figure 1 * | 1,3,9, 10 | |
| A,D | GB-A-1 603 519 (PROCESS SCIENTIFIC INNOVATIONS LTD) * Page 3, lines 2-14; figures 1,2 * | 9 | TECHNICAL FIELDS SEARCHED (Int. Cl.4) |
| A | US-A-4 203 739 (H. ERDMANNSDöRFER) | | B 01 D 46/00 |

The present search report has been drawn up for all claims

| Place of search | Date of completion of the search | Examiner |
|---|---|---|
| THE HAGUE | 13-04-1988 | POLESAK, H.F. |